Europäisches Patentamt

(19) European Patent Office

Office européen des brevets

(11) Publication number : **0 463 779 A1**

# (12) EUROPEAN PATENT APPLICATION

(21) Application number : **91305457.3**

(22) Date of filing : **17.06.91**

(51) Int. Cl.[5] : **G02B 6/12, G02B 6/26, G02B 6/28**

(30) Priority : **16.06.90 GB 9013510**

(43) Date of publication of application :
**02.01.92 Bulletin 92/01**

(84) Designated Contracting States :
**DE FR IT**

(71) Applicant : **GEC-FERRANTI DEFENCE SYSTEMS LTD.**
**The Grove, Warren Lane**
**Stanmore, Middlesex HA7 4LY (GB)**

(72) Inventor : **Moffat, James**
**39 Silverknowles Crescent**
**Edinburgh 4, Scotland (GB)**

(74) Representative : **Goddin, Jeremy Robert et al**
**The General Electric Company plc, Central**
**Patent Department, Marconi Research Centre,**
**West Hanningfield Road**
**Great Baddow, Chelmsford, Essex CM2 8HN**
**(GB)**

(54) **Fibre optic waveguide beam splitter.**

(57)  The integrated optical circuit (58) comprises a substrate (50) having a channel (59) formed therein, respective light guides (51, 52, 53, 54) of a material of higher refractive index than the substrate being formed in the substrate intersecting the channel (59) such that light guides on the same side of the channel (51, 52 and 53, 54) subtend equal angles to the channel and the axes of light guides on appropriate sides of the channel (51, 53 and 52, 54) are parallel. By inserting a suitable beam splitter element into the channel, the circuit functions as a beam splitter.

The outer edge of the circuit may have a vee groove (56) to couple the core of a fibre optic cable to a light guide (51) of the circuit.

By use of an appropriate beam splitter element a wavelength division multiplexer may be constructed for use in a two-way optical fibre communication system utilising wavelength division multiplexing in both directions.

Fig. 5

EP 0 463 779 A1

This invention relates to a fibre optic waveguide beam splitter. Such beamsplitters are used for combining two or more light paths into a single path or for dividing a single light path into two more paths.

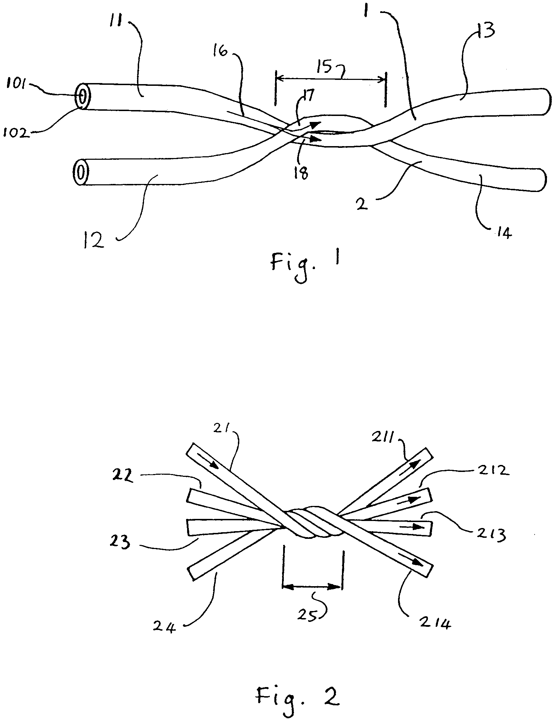

Figure 1 shows a prior art beam splitter comprising a biconical coupler. The coupler comprises two optical fibres 1, 2 each having a core 101 and cladding layer 102. The fibres are twisted together, placed under tension, and heated to about 1500° C. This stretches the fibres in the overlap region 15, thereby making the fibres thinner. Coupling between the fibres is by evanescent field coupling, the evanescent fields of the fibres increasing as the fibres are made thinner. Stretching is continued until the desired value of coupling is obtained between the input fibres 11, 12 and the output fibres 13, 14. Accordingly manufacture of such couplers is not straightforward and the completed coupler requires a relatively long overlap region 15 to obtain the desired coupling ratio between the fibres and hence is physically long.

To obtain a greater number of input and output ports, a corresponding number of fibres must be used. In Figure 2 four fibres are used to to produce a coupler with four input ports 21, 22, 23, 24 and four output ports 211, 212, 213, 214, the fibres being twisted together provide an evanescent field coupling overlap region 25.

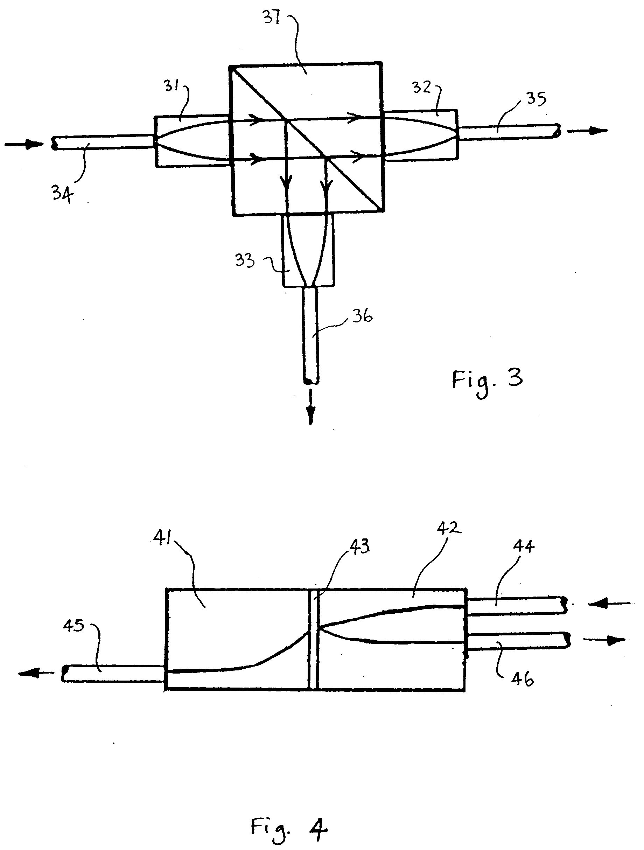

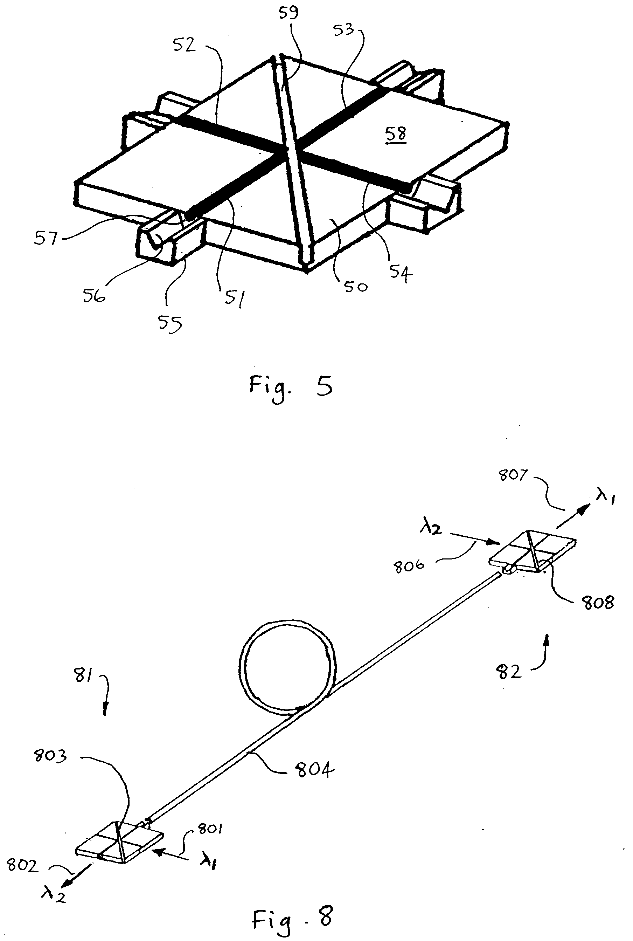

Another type of prior art coupler shown in Figure 3 uses a conventional cube beam splitter in conjunction with graded index rod (GRIN) lenses, also referred to as SELFOC (TM) lenses. The GRIN lenses couple the input and output optical fibre coils 34, 35, 36 to the beam splitter cube 37. While the use of GRIN lenses reduces the alignment tolerance requirements between the optical fibre cores and the beam splitter cube, the arrangement involves the use of number of discrete components of small physical size which have to be mechanically mounted relative to one another.

In practice this involves the provision of a costly precision machined holder into which the various parts have to be assembled.

Another type of prior art coupler shown in Figure 4 uses a pair GRIN lenses 41, 42 having a semi-reflective layer 43 sandwiched between them. Light from an input fibre 44 is split between the output fibres 45, 46 according to the transmission to reflection ratio of the semi-reflective layer 43 and the ratio of the apertures of the output films 45, 46 to the aperture of the GRIN lenes 41, 42. This coupler has relatively high coupling losses.

It is known to provide integrated optical circuits in which optical light guides are produced in a substrate by locally modifying the refractive index of the substrate, the region of modified refractive index constituting the light guide. While it is known to provide splitters and combiners in such circuits by providing branched light guides in the manner of a letter Y, prior art arrangements have been characterised by the relatively narrow angles of divergence between the branched channels. This has meant that such prior art arrangements have of necessity been physically large, as it is not practicable to produce light guides having small radius bends in integrated optical circuits due to excessive light loss. The size problem is particularly marked where a single input path has to be split into a large number of output paths or vice versa.

It is known from EP 0210556 to provide an integrated optical beam splitter comprising a substrate having first and second interface surfaces, the first surface facing the second surface, first and second optical light guides being formed in the substrate and arranged such that axes thereof intersect at the first interface surface and such that the angle subtended by each axis respectively and the first interface surface are substantially equal, a third light guide being provided in the substrate on an opposite side of the interface surfaces to said first light guide and extending from the second interface surface substantially parallel to the axis of the first light guide. In this prior art the first and second interface surfaces are substantially coincident, being constituted by the walls of a crack which is produced in the substrate. Beam splitting is effected by means of the air-substrate interfaces resulting from the presence of the crack. No discrete beam splitting element is used, and the angle subtended between the light guides and the crack is selected so as to make the beam splitter substantially polarisation-insentive.

This prior art arrangement does provide a relatively simple construction and, because the branch optical path is produced by reflection rather than by causing a beam to diverge at a shallow angle, allows a reasonably compact layout to be attained. However, this prior art can only be used as a splitter and cannot be readily adapted for uses such as combiners and/or wavelength-sensitive multiplexers.

Further, because of the angle of orientation of the reflected path is predetermined by the the requirement to produce polarisation - insensitive coupling, the reflected light path is in general not perpendicular to the incident light path. It is therefore difficult to adapt this prior art to produce a beam splitter in which the light is split into three or more paths, nor can the ratio of the light in the various paths be readily adjusted at will as the ratio is predetermined by the angular orientation of the light guides relative to the crack.

The present invention seeks to overcome the disadvantages of the prior art and to provide an improved integrated optical circuit beam splitter.

The invention relates to an integrated optical circuit beam splitter device, such as one comprising a substrate having an integrated optical circuit beam splitter device comprising a substrate having first and second interface surfaces formed therein, the first surface facing the second surface, first and second optical light guides being formed in the substrate and arranged such that the axes thereof intersect at the first interface surface and such that the angle subtended by each axis respectively and the first interface surface are substantially equal, a third light guide being provided in the substrate on an opposite side of the interface surfaces to said first light guide and extending from the second interface surface substantially parallel to the axis of the first light guide. In accordance with the invention a beam splitter element is disposed between the first and second interface surfaces in the region where the light guides intersect said interface surfaces.

The use of the discrete beam splitting element allows the parameters of the beam splitter to be determined by the beam splitting element per se and rather than by the structure of the integrated optical circuit. Thus, according to the type of element used, the arrangement can function as a polarisation-sensitive beam splitter, a polarisation-insensitive beam splitter, a wavelength-sensitive beam splitter, or a beam splitter which divides incident light between the reflected and the transmitted paths in any required ratio. The axis of the first light guide may be laterally offset relative to the axis of the third light guide. This enables the finite optical thickness of the beam splitter element to be compensated for. This can be advantageous in cases where the beam splitter thickness is not negligible and where the refractive index of the beam splitter element differs appreciably from the refractive index of the material constituting the optical light guides.

A fourth optical light guide may be formed in the substrate extending from the second interface surface on said opposite side in a direction substantially parallel to the axis of the second light guide. Such a construction is advantageous in that it facilitates construction of a dual optical directional coupler which can be used in either direction. The second light guide of such an arrangement may be laterally offset relative to the axis of the fourth light guide. In a particularly advantageous construction the angle of intersection between the axis of the first and second optical light guides is substantially right angle. This facilitates the cascade connection of a plurality of devices or the construction of a plurality of beam splitters in a single integrated optical circuit in applications where a single input has to be split between a plurality of outputs or vice versa.

The end of at least one light guide may extend between one of the first or second interface surfaces and a region adjacent to the substrate. Means for coupling the light guide to the core of an optical fibre may be provided at the edge of the substrate. The coupling means may comprise a vee groove dimensioned such that, when the core of a fibre optic cable is laid in the groove in contact with both walls of the groove, the end of the core is aligned with the end of the light guide. The substrate may comprise a photo-polymer or a semiconductor. The light guides may be produced by photolithography. A channel may be provided in the vicinity of the substrate, the first and second interface surfaces comprising the walls of the channel. The channel may extend completely through the substrate at least in the vicinity of the intersection of the axis of the first and second light guides. Alternatively the channel may not extend completely through the substrate at any point.

The beam splitter element may comprise a wavelength-sensitive beam splitter. The optical properties of the beam splitter may be such that substantially all light within a first waveband is transmitted and substantially all light within a second waveband is reflected, the first and second wavebands being non-overlapping.

Apparatus may be constructed using two devices in accordance with the invention, the third light guide of one device being coupled with the first light guide of the other device, the beam splitter of the other device being such that part of its first band and at least part of its second band lies within the first band of the first device in the case where each device comprises a respective wavelength-sensitive beam splitter element. Alternatively the second light guide of one device may be coupled to the first light guide of the other device, the beam splitter of the other device being such that at least part of its first band and at least part of its second band lies within the second band of the first device.

Arrangements in accordance with the invention may be used to construct a variety of different types of beam splitter, for example wavelength-division multiplexers, wavelength-division de-multiplexers, wavelength-division multiplexers/de-multiplexers or polarisation-sensitive beam splitters or multiplexers. An optical communications system may be constructed by using at least one beam splitter arrangement in accordance with the invention and a fibre optic cable.

In a particularly advantageous arrangement each end of the cable is terminated by a respective beam splitter arrangement in accordance with the invention. Integrated optical devices in accordance with the invention may be manufactured in any desired manner. A particularly advantageous technique is to produce the arrangement in accordance with the invention by casting. This allows the first and second interfaces and/or the means for coupling the light guides to the core to be produced simply and ecomomically in a single operation with highly repeatable accuracy. The light guides themselves may be produced subsequent to casting by photolithography or any other convenient technique.

Thus devices in accordance with the invention are simple and economical to construct and provide highly reproducible accuracy without the need for individual calibration or adjustment during manufacture.

Embodiments of the invention will now be described by way of example with reference to the accompanying drawings in which;

Figure 1 shows a prior art biconical fibre coupler;

Figure 2 shows another prior art biconical fibre coupler;

Figure 3 shows a prior art beam splitter cube coupler;

Figure 4 shows a prior art partially reflecting beam splitter coupler;

Figure 5 shows a perspective view of an integrated optical circuit chip in accordance with the invention;

Figure 6 shows a plan view of Figure 5;

Figure 7 shows an enlarged view of a modification of Figure 5 and in accordance with the invention;

Figure 8 shows a wavelength multiplexed fibre optic cable communication system in accordance with the invention; and

Figure 9 shows another wavelength multiplexed fibre optic cable communication system in accordance with the invention.

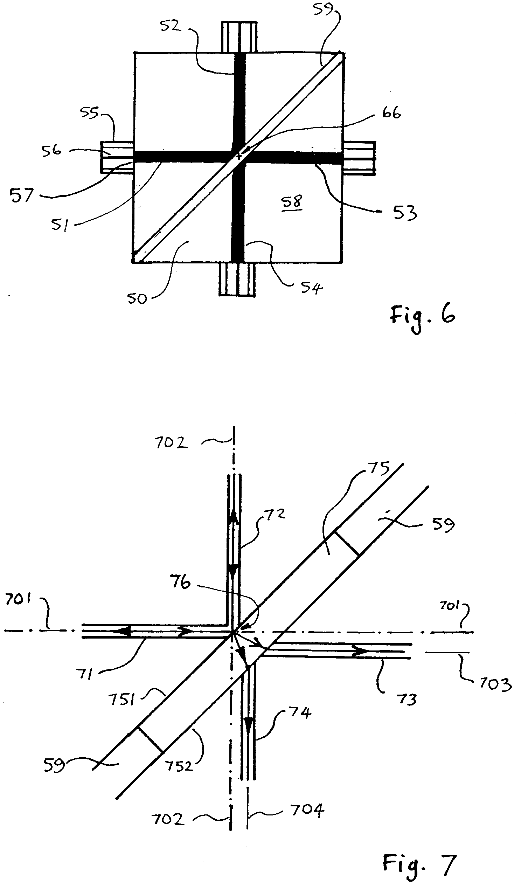

Referring to Figure 5 and Figure 6, in which the same reference numerals denote the same items, an optical integrated circuit chip 58 in accordance with the invention comprises a substrate layer 50 in which first, second, third and fourth light guides 51 to 54 are fabricated. The light guides 51 to 54 have a core of a first refractive index n1, while the substrate has a second refractive index n2 (n1>n2) which functions as the cladding layer of the light guides 51 to 54. As shown in Figures 5 and 6, light guide 51 is aligned with light guide 54. A channel 59 runs diagonally across the chip 58 intersecting the crossing point 66 of the axes of light guides 51 and 52 such that the sidewalls of the channel cut across the light guides and the ends so cut open out onto the sidewall of the channel. The light guides 51 and 52 subtend equal angles to the axis of the channel 59. the preferred angle is 45 degrees, whereby the axes of light guides 51 and 52 are mutually perpendicular, but the invention is not restricted to this particular angle. The outer ends of the light guides 51 to 54 terminate at respective arrangements for coupling the light guides to fibre optic cables. Only the coupling arrangement for light guide 51 will be described, as the others are identical. The end 57 of light guide 51 terminates at the edge of the chip 58 so that it opens out onto a vee groove 56 provided in the upper surface of a lateral extension 55 of the chips. To couple a fibre optic cable (not shown), the outer buffer materials (if any) are stripped from the end of the cable, leaving only the central optical fibre comprising a core and its surrounding cladding. The vee groove is dimensioned such that when the central optical fibre is laid in the groove so that it rests on the inclined sidewalls, its core is aligned with the end 57 of the light guide 51. The optical fibre is pushed along the groove so that the free end of its core abuts the end 57 of the light guide. It is then secured in position by any convenient means such as a bonding medium.

The chip 58 may be manufactured by any convenient method, however, a preferred technique is to manufacture it by casting a photosensitive polymer in a mould. This allows the body of the chip, the extensions (if any), the vee grooves, and the channel to be made simultaneously in one simple operation with reproducible accuracy. After casting, the light guides 51 to 54 are fabricated by photo lithography. If necessary, a further cladding layer may be applied to the exposed surfaces of the chip so that the light guides 51 to 54 are completely surrounded by a cladding layer of the second refractive index n2.

Alternatively the chip 58 may be made by other conventional optical integrated circuit techniques using glass or semi-conductor substrates and processes known per se such as ion exchange in glass, chemical vapour deposition (CVD), or semi-conductor technology.

The chip in accordance with the invention when used in conjunction with a splitter element located in the channel 59 functions as an optical directional coupler or beam splitter. The type of beam splitter element to be used will determine both the width of the channel and the positions of light guide 51 to 54. When a Pellicle beam splitter is used the channel will be dimensioned to accommodate the Pellicle holder. As a Pellicle per se has a negligible optical thickness, the light guide 51 can be aligned on the same axis as light guide 53 and the light guide 52 can be aligned on the same axis as the light guide 54 as shown in Figure 6. This arrangement yields a substantially symmetrical layout in which any of the ports can be used as input or output ports.

Figure 7 shows in diagrammatic form a modified arrangement in accordance with the invention for use in conjunction with semi-reflecting mirror beam splitters having finite optical thickness. A semi-reflecting mirror beam splitter 75 is located within the channel 59, and light guides 71 to 74 correspond with light guides 51 to 54 of Figure 6. However, unlike the arrangement of Figure 6, the light guides on opposite side of the channel are laterally displaced to allow for the finite optical thickness of the beam splitter element 75. Thus the axis of 701 of light guide 71 is offset from the axis 703 of light guide 73, and similarly for the axes 702, 704 of light guides 72, 74.

Beam splitter element 75 can be made a wavelength - independent or wavelength - dependent according to the type of semi-reflecting layer 751. For example it can be wavelength - independent, splitting light between the reflected and transmitted paths in any desired predetermined ratio, or it can be made to reflect wavelengths lying in one band and transmit wavelengths lying in another band different from the first band. The transmitted band may consist of longer or shorter wavelengths than the reflective band. Couplers in accordance with the invention incorporating frequency-selective beam splitter elements may be used to construct an optical multiplexers in a particularly compact manner.

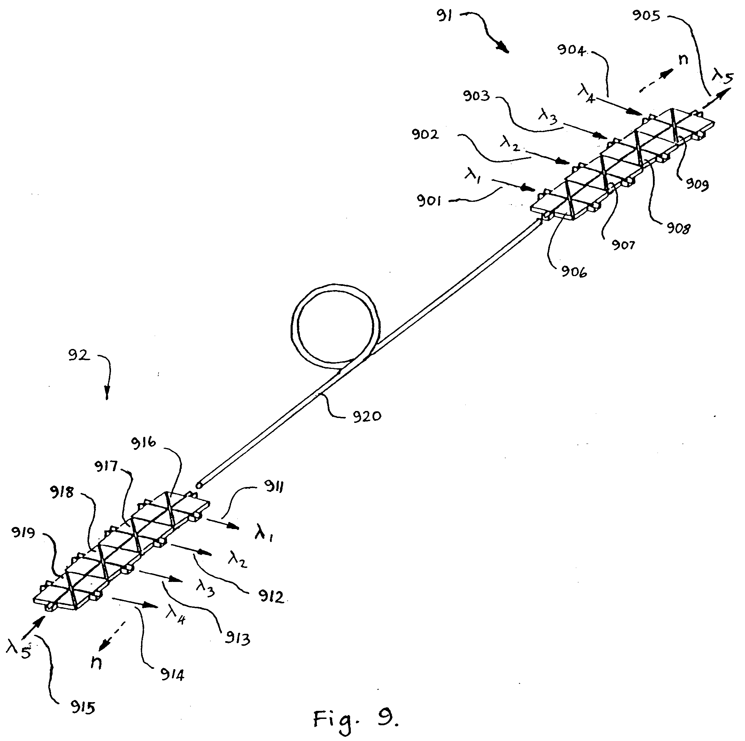

Figure 8 shows in partly exploded form a multiplexed fibre optic transmission system using couplers in accordance with the invention. A first coupler 81 has in its channel 803 a first beam splitter element (not shown) which reflects light wavelength $\lambda_1$ and transmits wavelengths $\lambda_2$. Light 801 at $\lambda_1$ is input from a source (not shown), reflected by the beam splitter element (not shown) and launched into a fibre optic cable 804 whose other end is coupled to a second coupler 82 having in its slot 808 a second beam splitter element, (not shown), which transmits light of a wavelength $\lambda_1$ and reflects light of a wavelength $\lambda_2$. Light $\lambda_1$ received from the fibre optic cable 804 passes through the beam splitter element (not shown) and emerges at 807 where it impinges on a photo-diode (not shown). Transmission in the reverse direction is effected by applying light 806 at wavelength $\lambda_2$ from a light source (not shown) to coupler 807. This light is reflected by the beam splitter element (not shown) in the channel and launched into the cable 804. At the far end it enters the coupler 801 and passes through the beam splitter element (not shown) in channel 803 to emerge as a beam of light 802 at $\lambda_2$ where it impinges on a photo-diode not shown.

In this embodiment the beam splitters have complimentary transmission and reflection properties as far as the wavelengths $\lambda_1$ and $\lambda_2$ are concerned. This allows the input to be the reflected port and the output to be the transmitted port at both ends of the link. It would be equally possible to use the same type of beam splitter in both couplers, in which case the input and output ports at one end would be interchanged.

A number of couplers in accordance with the invention may be cascaded to construct a multiple wavelength multiplexing arrangement for larger numbers of wavelengths. Such an arrangement is shown in Figure 9, in which a multiplexer 91 comprises four couplers with their transmitted paths in series. Each channel 906, 907, 908 and 909 contains a respective beam splitting element (not shown), each element having a different and transition point between between reflection and transmission wavelength bands. Beams of light 901 to 904 at different wavelengths $\lambda_1$ to $\lambda_4$ are reflected by the beam splitter elements not shown of their associated couplers, and transmitted by the beams splitters, not shown of the other couplers such that all four beams $\lambda_1$ to $\lambda_4$ are launched into the light guide 920. A substantially identical arrangement of couplers 92 at the other end of the cable, in which the beam splitter elements not shown in channels 916 to 919, having identical optical properties to the beam splitters in channels 906 to 909, ensure that the beams light 911 to 914 at wavelengths $\lambda_1$ to $\lambda_4$

emerge at their appropriate ports thence to be lead to respective photo-diodes or other optical detectors, not shown. Similarly in the reverse direction, a beam of light 915 at wavelength $\lambda_5$ passes through all the beam splitter elements, is launched into the fibre optic cable 920, passes through all the beam splitter elements at the receiver 91 and emerges as a beam of light 905 at the far end which is applied to a photo-diode or other optical detector, not shown.

The invention is not restricted to the particular arrangements shown in the Figures. For example, the fibre optic cable coupling portion 55 including the vee channel is constructed as an extension to the body of the chip in Figures 5 and 6. It may equally well be provided in the main body of the chip rather than on an extension thereto. Other methods of coupling between the light guides on the chip and external components may be used as appropriate to the nature of the external or components or light guides to be coupled. Light detectors and/or sources may be integrated on the chip rather than being external components. The light guides need not necessarily be straight for their entire extent; reference to the axes of the light guides only serves to define the direction of orientation of those portions of the light guide immediately adjacent to the channel. While in the embodiments the light guides are shown as extending at right angles to their adjacent light guides, this is not essential. It is only necessary that the light guides on the same side of the channel be inclined at equal angles to the channel such that a beam of light leaving one light guide is reflected into the adjacent guide by the beam splitter. The channel need not extend completely across the chip. It is only necessary that it be long enough to accommodate the beam splitter element which is to fit into the channel. In this case, the channel may extend completely through the chip on one face to the another, the land at either end of the channel maintaining alignment between the portions of the chip on either side of the channel. The channel and grooves need not be manufactured by casting but can be made by any other method such as machining or milling. Depending on the type of beam splitter used, the individual coupler devices of the arrangement of Figure 9 could be connected in a number of different configurations. For example, if the beam splitter in channel 906 were replaced by one having inverse optical properties, the connection of the fibre optic cable and the $\lambda_1$ input 901 could be interchanged. This would allow the optical fibre 920 to be connected to the side of the array of couplers rather than to the end, which may be more convenient in certain applications. Similarly the couplers need not be connected in series, or in a line, but could be arranged in a dendritic or a serpentine arrangement. The beam splitter channels could also be arranged in alternate directions in alternate devices so that such the inputs and/or outputs appear on alternate sides of the array rather than all being on the same side of the array. Although in the embodiments each coupler has been shown as having four light guides, in many applications only three will actually be used. Accordingly, for such applications, the redundant fourth light guide need not be provided. Further, although in Figure 8 the multiplexer 91 and multiplexer 92 are shown as constructed as a number of discrete devices butt-joined together, they may of course be equally well constructed as a single unitary body.

**Claims**

1. An integrated optical circuit beam splitter device comprising a substrate having first and second interface surfaces formed therein, the first surface facing the second surface, first and second optical light guides being formed in the substrate and arranged such that the axes thereof intersect at the first interface surface and such that the angle subtended by each axis respectively and the first interface surface are substantially equal, a third light guide being provided in the substrate on an opposite side of the interface surfaces to said first light guide and extending from the second interface surface substantially parallel to the axis of the first light guide, characterised in that a beam splitting element is disposed between the first and second interface surfaces in the region where the light guides intersect said interface surfaces.

2. An integrated optical circuit device as claimed in claim 1 characterised in that the axis of the first light guide is laterally offset relative to the axis of the third light guide.

3. An integrated optical circuit device as claimed in claim 1 or 2 characterised in that a fourth optical light guide is formed in the substrate extending from the second interface surface on said opposite side in a direction substantially parallel to the axis of the second light guide.

4. An integrated optical circuit device as claimed in Claim 3 characterised in that the axis of the second light guide is laterally offset relative to the axis of the fourth light guide.

5. An integrated optical circuit device as claimed in any preceding claim characterised in that the angle of intersection is substantially a right angle.

6. An integrated optical circuit device as claimed in any preceding claim characterised in that the end of at least one light guide extends between one of the first and second interface surfaces and a region adjacent the edge of the substrate, means for coupling the light guide to the core of an optical fibre being provided therein.

7. An integrated optical circuit device as claimed in claim 6 characterised in that the coupling means comprises a vee-groove dimensioned such that, when the core of a fibre optic cable is laid in the groove in contact with both walls thereof, the end of the core is aligned with the end of the light guide.

8. An integrated optical circuit device as claimed in any preceding claim characterised in that the substrate comprises a photo-polymer or a semiconductor.

9. An integrated optical circuit device as claimed in claim 7 or 8 characterised in that the light guides are produced by photolithography.

10. An integrated optical circuit devices as claimed in any preceding claim, characterised in that a channel is provided in the substrate, which channel does not extend completely through the substrate at any point, further characterised in that the first and second interface surfaces comprise walls of the channel.

11. An integrated optical circuit device as claimed in any one claims 1 to 9, characterised in that a channel is provided in the substrate, which channel extends completely through the substrate at least at the intersection of the axes of the first and second light guides, further characterised in that the first and second interface surfaces comprise walls of the channel.

12. An integrated optical circuit device as claimed in any preceding claim, characterised in that said beam splitting element comprises a wavelength-sensitive beam splitter.

13. An integrated optical circuit device as claimed in claim 12 characterised in that said wavelength-sensitive beam splitter transmits substantially all light within a first waveband and reflects substantially all light within a second waveband, said first and second wavebands being non-overlapping.

14. Beam splitting apparatus comprising first and second integrated optical circuit device characterised in that each device comprises a device as claimed in claim 13, the first light guide of the second device being coupled to the third light guide of the first device, the beam splitter of the second device being such that at least part of its first band and at least part of its second band lie within the first band of the first device.

15. Beam splitting apparatus comprising first and second optical devices characterised in that each device comprises a device as claimed in claim 13, the first light guide of the second device being coupled to the second light guide of the first device, the beam splitter of the second device being such that at least part of its first band and at least part of its second band lie within the second band of the first device.

16. An optical wavelength multiplexer characterised by beam splitter apparatus according to any of claims 12 to 15.

17. An optical wavelength demultiplexer characterised by beam splitter apparatus according to any of claims 12 to 15.

18. An optical waveguide multiplexer/demultiplexer characterised by beam splitter apparatus according to any of claims 12 to 15.

19. An optical communications system characterised in that the system comprises a fibre optic cable and at least one beam splitter apparatus according to any preceding claim.

20. A method of manufacturing an integrated optical circuit beam splitter device as claimed in any preceding claim, characterised in that the method includes a step in which the substrate is produced by casting such that the first and second interface surfaces are produced by the casting operation.

21. A method of manufacturing an integrated optical circuit beam splitter device as claimed in claim 6 or any of claims 7 to 10 when appendant to claim 6 characterised in that the substrate is produced by casting, further characterised in that the means for coupling the light guide to the core of an optical fibre is produced by the casting operation.

Fig. 1

Fig. 2

Fig. 3

Fig. 4

Fig. 5

Fig. 8

Fig. 6

Fig. 7

Fig. 9.

**European Patent Office**

**EUROPEAN SEARCH REPORT**

Application Number

EP 91305457.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP - A2 - 0 210 556<br>(CARL-ZEISS-STIFTUNG)<br>* page 6, line 1 - page 9, line 4; claims 1-6 * | 1,3,5,<br>8-13,<br>16-18 | G 02 B 6/12<br>G 02 B 6/26<br>G 02 B 6/28 |
| Y | GB - A - 2 189 621<br>(NIPPON SHEET GLASS)<br>* Fig. 2,5 * | 1,8,9,<br>10,12,<br>13,<br>16-18 | |
| Y | GB - A - 2 049 988<br>(SIEMENS)<br>* Fig. 1a,1b,2 * | 1,3,5,<br>6,11 | |
| A | US - A - 4 765 702<br>(DOHAN et al.)<br>* Fig. 1,2; column 4, line 29 - column 5, line 37 * | 7,9,<br>20,21 | |

TECHNICAL FIELDS SEARCHED (Int. Cl.5)

G 02 B 6/00

The present search report has been drawn up for all claims

| Place of search | Date of completion of the search | Examiner |
|---|---|---|
| VIENNA | 19-09-1991 | GRONAU |